# EUROPÄISCHE PATENTSCHRIFT

(11) **EP 1 665 496 B1**
(45) Veröffentlichungstag und Bekanntmachung des Hinweises auf die Patenterteilung: **30.07.2008**
(21) Anmeldenummer: 04786752.8
(22) Anmeldetag: 09.09.2004
(51) Int. Cl.: H02J 7/00

(54) **LADEGERÄT ZUM AUFLADEN EINER BATTERIE UND VERFAHREN ZU SEINEM BETRIEB**
CHARGING DEVICE FOR CHARGING A BATTERY AND METHOD FOR THE OPERATION THEREOF
CHARGEUR SERVANT A CHARGER UNE BATTERIE ET PROCEDE POUR FAIRE FONCTIONNER CE CHARGEUR

(30) Priorität: 12.09.2003 DE 10342129
(43) Veröffentlichungstag der Anmeldung: 07.06.2006
(73) Patentinhaber: ROBERT BOSCH GMBH, 70442 Stuttgart (DE)
(72) Erfinder: ETZOLD, Peter, 73061 Ebersbach (DE)
(86) Internationale Anmeldenummer: PCT/DE2004/002031
(87) Internationale Veröffentlichungsnummer: WO 2005/027303

(56) Entgegenhaltungen:
- EP-A- 0 525 744
- DE-A1- 2 430 684
- DE-A1- 3 834 001
- US-A- 3 242 411
- US-A1- 2002 109 485

## Beschreibung

### Stand der Technik

Die Erfindung betrifft ein Verfahren zum Betreiben eines netzgespeisten Ladegerätes für eine Batterie, ein Computerprogramm und Ladegerät zum Durchführen dieses Verfahrens sowie einen Datenträger mit dem Computerprogramm.

Derartige Verfahren und Ladegeräte sind im Stand der Technik, zum Beispiel in Form des Batterieladegerätes LM 20/30 E von der Pobert Bosch GmbH grundsätzlich bekannt. Das genannte Ladegerät wird an die Netzspannung angeschlossen und dient zum Aufladen einer Batterie, insbesondere einer Autobatterie. Es umfasst einen Ladetransformator zum Transformieren der primärseitigen Netzspannung in eine Sekundärspannung und einen dem Ladetransformator auf dessen Sekundärseite nachgeschalteten Gleichrichter zum Bereitstellen einer Ladespannung für die Batterie. Kernstück des bekannten Ladegerätes ist eine Steuereinrichtung zum Ansteuern des Gleichrichters über ein Steuersignal im Ansprechen auf die Ladespannung. Die Steuereinrichtung ist ausgebildet, die Batterie nicht nur aufzuladen, wenn sie leer ist, sondern auch in ihrem aufgeladenen Zustand zu halten und auf diese Weise ihrer Selbstentladung entgegenzuwirken. Dies geschieht in einem sogenannten Ladeerhaltungsmodus. Dieser Ladeerhaltungsmodus umfasst eine zyklische Abfolge von einer Ruhephase und einer Aufladephase. In der Ruhephase entlädt sich die Batterie insbesondere aufgrund ihrer Selbstentladung von einer vorgegebenen, oberen Schwellenspannung auf eine untere Schwellenspannung, welche niedriger als die obere Schwellenspannung, vorzugsweise aber größer als die Nennspannung der Batterie, ist. Nach Erreichen dieser unteren Schwellenspannung ist die Ruhephase innerhalb des Ladeerhaltungsmoduses beendet und das Steuergerät ist ausgebildet von der Ruhephase in eine Auffrischungsphase zu wechseln. Innerhalb der Auffrischungsphase wird die Batterie über den Ladetransformator des Ladegerätes wieder von der unteren auf die obere Schwellenspannung aufgeladen. Die Auffrischungsphase ist zeitlich wesentlich kürzer als die Ruhephase.

Diesem bekannten Ladegerät haftet der Nachteil an, dass es selbst während der Ladeerhaltungsphase und insbesondere auch während der lang andauernden Ruhephase einen hohen Stromverbrauch und damit eine hohe Verlustleistung aufweist. Diese hohe Verlustleistung erklärt sich daraus, dass auch während der Ruhephase, das heißt wenn kein Ladestrom fließt, insbesondere der Ladetransformator trotzdem eine hohe Stromaufnahme zur Realisierung von Ummagnetisierungen zeigt.

Aus der DE 38 34 001 A1 ist ein Verfahren zum Betreiben eines netzgespeisten Ladegeräts für eine Batterie mit sämtlichen Merkmalen des Oberbegriffs des Anspruchs 1 bekannt. Die US 2002/109485 A1 offenbart ein Ladegerät zum Aufladen einer Batterie aus einer Netzspannung gemäß dem Oberbegriff des Anspruchs 9.

Ausgehend von diesem Stand der Technik ist es deshalb die Aufgabe der Erfindung, ein Ladegerät zum Aufladen einer Batterie, ein Verfahren zu seinem Betrieb, ein Computerprogramm zur Durchführung dieses Verfahrens und einen Datenträger mit diesem Computerprogramm in der Weise auszubilden, dass die Verlustleistung des Ladegerätes während es sich in einem Ladeerhaltungsmodus befindet, minimiert wird.

Diese Aufgabe wird durch das in Patentanspruch 1 beanspruchte Verfahren gelöst. Für das einleitend beschriebene Verfahren, das heißt den beschriebenen zyklischen Wechsel zwischen einer Ruhephase und einer Auffrischungsphase innerhalb eines Ladeerhaltungsmoduses wird die Aufgabe dadurch gelöst, dass eine Steuereinrichtung des Ladegeräts zur Steuerung des Betriebs des Ladegeräts von einem Versorgungstransformator mit einer Versorgungsspannung versorgt wird, , wobei der Versorgungstransformator der Schalteinrichtung nachgeschaltet und mit seiner Primärseite parallel zu dem Ladetransformator geschaltet wird oder der Versorgungstransformator der Schalteinrichtung vorgeschaltet und mit seiner Primärseite an die Netzspannung angekoppelt wird, und dass zumindest der Ladetransformator des Ladegerätes während der Ruhephase von der Netzspannung getrennt wird.

### Vorteile der Erfindung

Eine derartige Vorgehensweise bietet den Vorteil, dass während der Ruhephasen, das heißt wenn die Batterie voll geladen ist und keine Auffrischungsladungen stattfinden, insbesondere der Ladetransformator keine Stromaufnahme zur Bereitstellung eines Ladestroms durchführt. Darüber hinaus wird durch das beanspruchte Abschalten auch sichergestellt, dass der Ladetransformator während der Ruhephase keinen Strom für andere Zwecke, insbesondere für Ummagnetisierungszwecke, aufnimmt. Auf diese weise wird die Verlustleistung des Ladetransformators während der Ruhephase auf einen Wert von 0 W abgesenkt. Die Abschaltung der Netzspannung von Ladetransformator und Versorgungstransformator bietet weiterhin den Vorteil, dass damit auch gleichzeitig alle von der Sekundärseite des Versorgungstransformators gespeisten anderen Komponenten des Ladegerätes von der Netzspannung abgeschaltet und damit verlustfrei geschaltet werden.

Die oben genannte Aufgabe der Erfindung wird weiterhin durch ein Computerorogramm und ein Ladegerät zum Durchführen des beanspruchten Verfahrens sowie durch einen Datenträger mit dem Computerprogramm gelöst. Die Vorteile dieser Lösungen, entsprechen im Wesentlichen den oben mit Bezug auf das beanspruchte Verfahren genannten Vorteilen. Darüber hinaus lassen sich zusätzliche Vorteile durch unterschiedliche Realisierungen des Ladegeräts in Form von unterschiedlichen Ausführungsbeispielen erzielen. Unterschiedliche Ausführungsbeispiele des Verfahrens und des Ladegerätes sind Gegenstand der abhängigen Ansprüche.

### Zeichnungen

Der Beschreibung sind insgesamt drei Figuren beigefügt, wobei
- Figur 1: ein erstes Ausführungsbeispiel für das erfindungsgemäße Ladegerät;
- Figur 2a: den Verlauf der Batteriespannung während eines Auflademoduses und eines Ladeerhaltungsmoduses;
- Figur 2b: ein Beispiel für den Verlauf eines Ladestromes während der Modi nach Figur 2a;
- Figur 2c: das Ein- und Ausschaltverhalten einer Schalteinrichtung in dem erfindungsgemäßen Ladegerät; und
- Figur 3: ein zweites Ausführungsbeispiel für das erfindungsgemäße Ladegerät
zeigt.

### Beschreibung der Ausführungsbeispiele

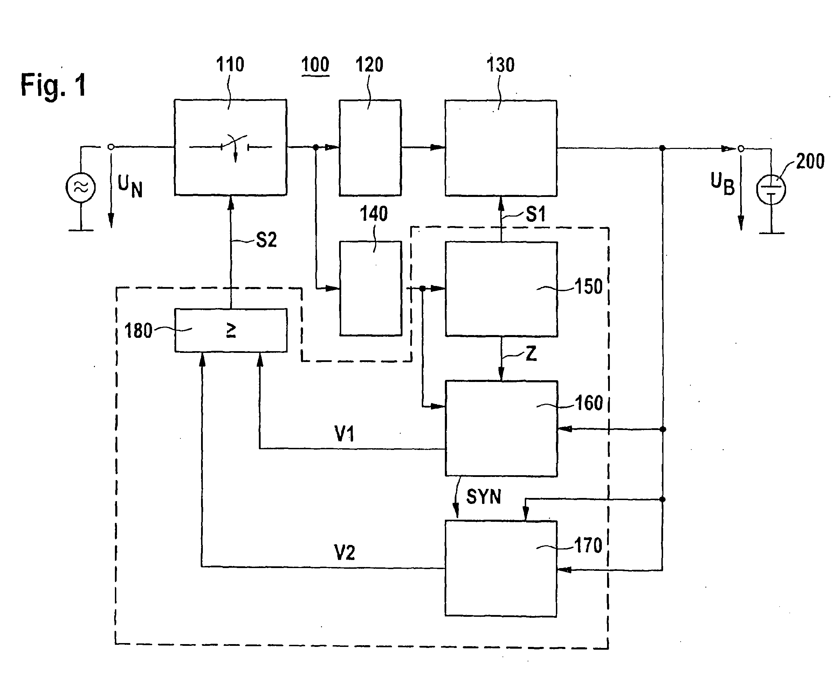

Die Erfindung wird nachfolgend detailliert in Form von Ausführungsbeispielen unter Bezugnahme auf die Figuren 1 bis 3 beschrieben.

Figur 1 zeigt ein erstes Ausführungsbeispiel für das erfindungsgemäße Ladegerät 100. Es ist an eine Netzspannung U_{N} angeschlossen und dient zum Aufladen einer Batterie 200. Es umfasst eine durch ein Schaltsignal S2 gesteuerte Schalteinrichtung 110 zum Aufschalten der Netzspannung U_{N} auf einen Ladetransformator 120 und einen zu dem Ladetransformator 120 primärseitig parallel geschalteten Versorgungstransformator 140. Dem Ladetransformator 120, welcher im Wesentlichen zum Bereitstellen des erforderlichen Ladestromes zum Aufladen der Batterie 200 dient, ist ein Gleichrichter 130 nachgeschaltet zum Bereitstellen einer Ladespannung U₅ für die Batterie 200. Der Versorgungstransformator 140 dient zum Bereitstellen einer Versorgungsspannung für eine Steuereinrichtung 150 und eine erste Vergleichereinrichtung 160. Die Steuereinrichtung 150 steuert über ein Steuersignal S1 den Gleichrichter 130. Über ein Zustandssignal Z informiert die Steuereinrichtung 150 die erste Vergleichereinrichtung 160 über den Betriebsmodus, zum Beispiel Ladeerhaltungsmodus, in dem das Ladegerät aktuell betrieben wird. Die erste Vergleichereinrichtung 160 vergleicht die Ladespannung U_{B}, welche bei angeschlossener Batterie der Batteriespannung entspricht, mit einer vorgegebenen oberen Schwellenspannung und erzeugt ein erstes Vergleichssignal V1, wenn die Batteriespannung diese obere Schwellenspannung U_{OG} erreicht oder überschritten hat.

Neben der ersten Vergleichereinrichtung 160 umfasst das Ladegerät 100 auch noch eine zweite vergleichereinrichtung 170. Diese wird in dem ersten Ausführungsbeispiel im Unterschied zu der ersten Vergleichereinrichtung 160 nicht von dem Versorgungstransformator 140, sondern aus der Batteriespannung U_{B} gespeist. Gleichzeitig dient die Batteriespannung U_{B} als Eingangsgröße. Die zweite Vergleichereinrichtung 170 vergleiche die Batteriespannung mit einer vorgegebenen unteren Schwellenspannung U_{UG} und erzeugt ein zweites Vergleichssignal V2, wenn die Batteriespannung die untere Schwellenspannung U_{UG} erreicht oder unterschritten hat. Zur Bildung des oben erwähnten Schaltsignals S2 zur Ansteuerung der Schalteinrichtung 110 werden das erste und das zweite Vergleichssignal V1, V2 in einem Oder-Logikmodul 180 miteinander Oder-verknüpft.

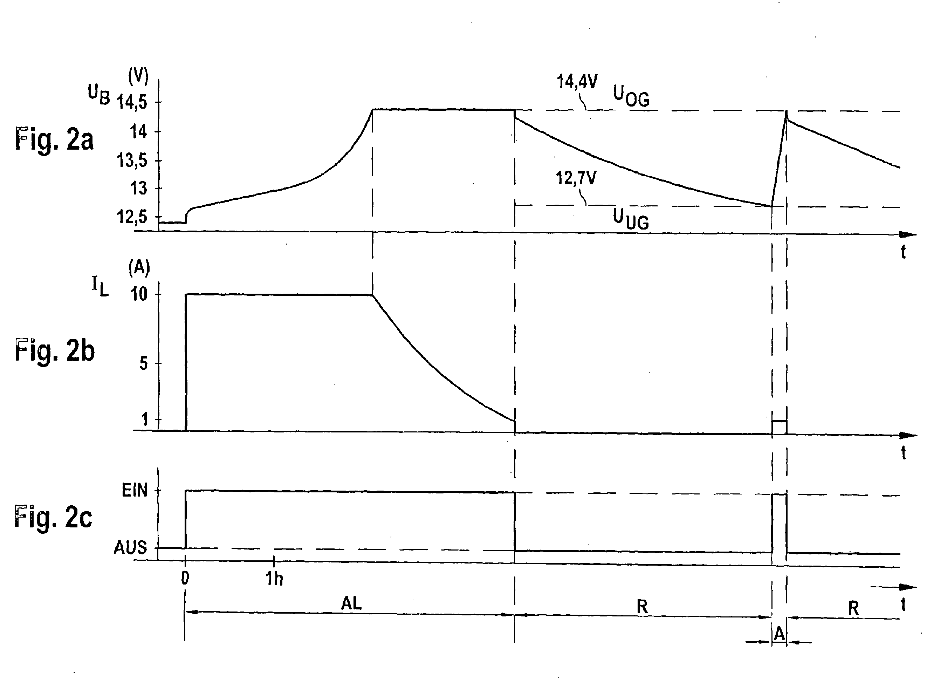

Unter Zuhilfenahme der Figuren 2a, 2b und 2c wird nachfolgend die Funktionsweise des in Figur 1 gezeigten Ladegerätes erläutert. Das Ladegerät 100 dient zunächst zum Aufladen der Batterie 200. Dazu versetzt die Steuereinrichtung 150 das Ladegerät 100 in einen sogenannten Auflademodus AL. Dieser Auflademodus besteht aus zwei aufeinanderfolgenden Phasen. Die erste Phase ist in Figur 2b daran zu erkennen, dass während dieser ersten Phase die Batterie mit einem Konstantstrom aufgeladen wird. Aufgrund dieser Ladung mit Konstantstrom steigt die Batteriespannung zunächst nur langsam, im Laufe der Zeit jedoch zunehmend schneller bis auf das Niveau der oberen Schwellenspannung U_{OG}. Mit dem Erreichen dieser oberen Schwellenspannung U_{OG} endet die erste Phase und es wird die zweite Phase des Auflademodus AL eingeleitet. Während dieser zweiten Phase wird die Batterie mit einer konstanten Ladespannung, welche der oberen Schwellenspannung entspricht, gespeist, siehe Figur 2a. Diese zweite Phase des Auflademodus AL endet dann, wenn der Ladestrom auf einen vordefinierten Schwellenstrom, welcher, wesentlich kleiner als der Konstantstrom während der phase 1 ist, abgesunken ist. Während des gesamten Auflademodus AL, das heißt sowohl während dessen erster wie auch während dessen zweiter Phase, ist die Schalteinrichtung 110 eingeschaltet.

Bei Vorliegen dieser beiden Kriterien, das heißt U_{B} = U_{OG} und Ladestrom kleiner gleich Schwellenstrom, steuert die Steuereinrichtung 150 das Ladegerät von dem Auflademodus AL in einen sogenannten Ladeerhaltungsmodus. Dieser ist durch einen sägezahnförmigen Verlauf der Batteriespannung, wie in Figur 2a gezeigt, gekennzeichnet. Er gliedert sich in zwei zyklisch aufeinanderfolgende Phasen, eine Ruhephase R und eine Auffrischungsphase A. Nach dem Auflademodus geht das Ladegerät innerhalb des Ladeerhaltungsmodus zunächst in die Ruhephase R über. Während dieser Ruhephase wird die Batterie nicht mehr mit einem Ladestrom I_{L} gespeist, wie in Figur 2b gezeigt; ihre Spannung sinkt von der oberen Schwellenspannung U_{OG} auf die untere Schwellenspannung U_{UG} ab. Dabei ist zu bedenken, dass die Batterie nach Abschluss des Auflademodus, das heißt während des Ladeerhaltungsmoduses, voll aufgeladen ist. Die untere Schwellenspannung U_{UG} liegt zwar betraglich unter der oberen Schwellenspannung U_{OG}, aber vorzugsweise immer noch oberhalb der Nennspannung der Batterie 200. Die in Figur 2a genannten Werte für die Batteriespannung U_{B} beziehen sich auf eine Batterie 200 mit einer Nennspannung von 12 V. Erfindungsgemäß wird die Schalteinrichtung 110 durch das Schaltsignal S2, genauer gesagt durch das Vergleichssignal V1, während der Ruhephase R ausgeschaltet, das heißt geöffnet, siehe Figur 2c. Damit wird bei dem in Figur 1 gezeigten ersten Ausführungsbeispiel des Ladegerätes der Ladetransformator 120 und der Versorgungstransformator 140 auf ihrer Primärseite ebenfalls von der Netzspannung entkoppelt. Ihre Stromaufnahme und damit auch ihre Verlustleistung werden auf diese Weise während der Ruhephase R zu Null gemacht. Dies gilt insbesondere deswegen, weil sie auf diese Meise auch daran gehindert werden, einen Strom zu Ummagnetisierungszwecker aufzunehmen.

Sobald die zweite Vergleichereinrichtung 170 festgestellt hat, dass die Batteriespannung U_{B}, insbesondere aufgrund von Selbstentladung der Batterie, auf den Wert der vorgegebenen unteren Schwellenspannung U_{UG} abgesunken ist, erzeugt sie das zweite Vergleichssignal V2 und schaltet damit, unabhängig von dem Zustand des ersten Vergleichssignals V1, über das Oder-Logikmodul 180 die Schalteinrichtung 110 wieder ein. Mit dem Einschalten, das heißt dem Anlegen der Netzspannung an den Ladetransformator und den Versorgungstransformator, ist das Ladegerät wieder in die Lage versetzt, einen Ladevorgang durchzuführen. Weil die Batterie 200 jedoch immer noch aufgeladen ist, ihre Batteriespannung jedoch lediglich auf die untere Schwellenspannung U_{UG} abgesunken ist, reicht in dieser Situation während des Ladeerhaltungsmodus eine kurze Auffrischung der Batterie 200 um ihre Batteriespannung U_{B} wieder auf den oberen Schwellenwert U_{OG} anzuheben. Dazu geht das Ladergerät kurzzeitig in eine Auffrischungsphase A über, während welcher, wie gesagt, die Netzspannung wieder an das Ladegerät angelegt und die Batterie über einen kleinen Ladestrom, der wesentlich kleiner als der Konstantladestrom während der ersten Phase des Aufladungsmoduses ist, aufgeladen wird. Das Ende dieser Auffrischungsphase A wird von der ersten Vergleichereinrichtung 160 dann erkannt und eingeleitet, wenn er erkenne, dass die Batteriespannung wieder die obere Schwellenspannung U_{UG} erreicht hat, nachdem sie zuvor während der vorangegangenen Puhephase auf die untere Schwellenspannung U_{UG} abgesunken war. Um diese Erkenntnis treffen zu können, wertet die erste Vergleichereinrichtung 160 neben der Batteriespannung U_{B} auch ein Zustandssignal Z aus, welches ihr von der Steuereinrichtung 150 zugeführt wird und welches eine Information über den aktuellen Betriebsmodus des Ladegerätes, insbesondere über das Vorliegen einer aktuellen Auffrischungsphase, beinhaltet.

Nach dem Ende einer Auffrischungsphase A geht das Ladegerät wieder in eine nachfolgende Ruhephase über. Dabei wird erfindungsgemäß die Netzspannung wieder über die Schalteinrichtung 110 abgeschaltet, um, wie gesagt, die ohmschen Verluste während dieser Zeit zu minimieren. Damit das erste Vergleichssignal jedoch überhaupt über das Oder-Logikmodül 180 und das Schaltsignal S2 ein Ausschalten der Schalteinrichtung 110 bewirken kann, ist es erforderlich, dass auch das zweite Vergleichssignal V2 in einen geeigneten Zustand versetzt wird. Dies wird erfindungsgemäß dadurch erreicht, dass die beiden Vergleichssignale in dieser Situation, das heißt beim Übergang von einer Auffrischungsphase in eine Ruhephase, miteinander synchronisiert sind.

Bei dem in Figur 1 gezeigten ersten Ausführungsbeispiel sind der Ladetransformator 120, der Gleichrichter 130, der Versorgungstransformator 140, die Steuereinrichtung 150 und der die erste Vergleichereinrichtung 160 an die Netzspannung angeschlossen und werden von dieser versorgt. Dies hat den Vorteil, dass sie bei Abschalten der Netzspannung, zum Beispiel während einer Ruhephase, keine Verlustleistung erzeugen. Dies gilt jedoch nicht für die zweite Vergleichereinrichtung 170, weil diese bei dem ersten Ausführungsbeispiel über die Batteriespannung gespeist wird. Dies ist insofern nachteilig, als dass die zweite Vergleichereinrichtung 170 die aufgeladene Batterie, insbesondere auch während des Ladeerhaltungsmoduses, belastet und damit unerfreulicherweise zur Entladung der Batterie, welche eigentlich aufgeladen werden sollte, beiträgt.

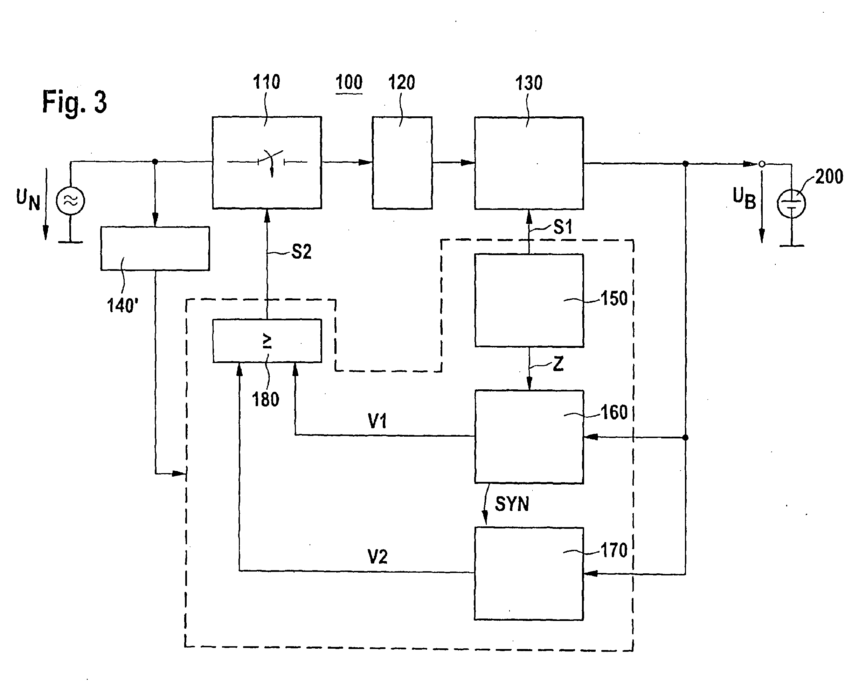

Dieser Nachteil wird mit dem in Figur 3 gezeigten zweiten Ausführungsbeispiel des Ladegerätes umgangen. Im Unterschied zu dem in Figur 1 gezeigten ersten Ausführungsbeispiel werden bei dem zweiten Ausführungsbeispiel die Steuereinrichtung 150, die erste und zweite Vergleichereinrichtung 160, 170 sowie das Oder-Logikmodul 180 über einen Versorgungstransformator 140' mit einer Spannung versorgt; der Versorgungstransformator 140' ist im Unterschied zu dem Versorgungstransformator 140 nicht abschaltbar, also fest, an die Netzspannung U_{B} angeschlossen. Damit entfällt nicht nur der Nachteil, dass die Batterie durch die zweite Vergleichereinrichtung, insbesondere auch während des Ladeerhaltungsmoduses belastet wird, sondern es besteht auch eine verbesserte Möglichkeit, über die Steuereinrichtung Displays oder Leuchtdioden anzusteuern, weil bei dem zweiten Ausführungsbeispiel eine kontinuierliche Spannungsversorgung gewährleistet ist. Das in Figur 3 gezeigte zweite Ausführungsbeispiel bietet zwar gegenüber dem in Figur 1 gezeigten ersten Ausführungsbeispiel den Vorteil, dass keine der Komponenten des Ladegerätes die Batterie belasten, demgegenüber hat es jedoch den Nachteil, dass die Steuereinrichtung 150, die erste und zweite Vergleichereinrichtung 160, 270 sowie das Oder-Logikmodul 180 kontinuierlich, das heißt insbesondere auch während des Ladeerhaltungsmodus, und insbesondere während der Ruhephase, über den Versorgungstransformator 140 mit einer Versorgungsspannung versehen werden und deshalb eine Verlustleistung erzeugen. Die Verlustleistung der genannten Komponenten des Ladegerätes, welche durch die gestrichelte Umrandung in Figur 3 zusammengefasst sind, ist jedoch erheblich geringer als die während einer gleichen Zeiteinheit von dem Ladetransformator 120 erzeugten Verlustleistung. Insofern ist auch dieses zweite Ausführungsbeispiel des Ladegerätes 100 in der Praxis durchaus vorteilhaft verwendbar.

Für beide Ausführungsbeispiele gilt Folgendes: Die Schalteinrichtung 110 wird vorzugsweise als Opto-Triac ausgeführt. Einzelne Komponenten des Ladegerätes 100, insbesondere die in den Figuren 1 und 3 jeweils gestrichelt-umrandeten Komponenten, werden vorzugsweise als integrierte Schaltung, zum Beispiel in Form eines Mikrocontrollers, mit einem geeigneten Computerprogramm realisiert. Insbesondere die Vergleichereinrichtungen 160 und 170 können jedoch auch als analoge Schaltungen in Hardware realisiert werden.

## Patentansprüche

1. Verfahren zum Betreiben eines netzgespeisten Ladegerätes (100) für eine Batterie (200) in einem Ladeerhaltungsmodus zum Halten der Batterie in einem aufgeladenen Zustand, wobei die Batterie (200) zyklisch zwischen einer Ruhephase (R) und einer Auffrischungsphase (A) wechselt, wobei sich die Batterie (200) in der Ruhephase (R) von einer oberen Schwellenspannung (U_{OG}) auf eine untere Schwellenspannung (U_{UG}), welche niedriger als die obere Schwellenspannung, aber vorzugsweise größer als die Nennspannung der Batterie ist, entlädt und wobei die Batterie (200) in der Auffrischungsphase (A) über einen Ladetransformator (120) des Ladegerätes (100) wieder von der unteren auf die obere Schwellenspannung aufgeladen wird; **dadurch gekennzeichnet, dass** eine Steuereinrichtung (150) des Ladegeräts (100) zum Ansteuern eines Gleichrichters (130), der eine Ladespannung für die Batterie (200) bereitstellt, von einem Versorgungstransformator (140) mit einer Versorgungsspannung versorgt wird, wobei der Versorgungstransformator (140) der Schalteinrichtung (110) nachgeschaltet und mit seiner Primärseite parallel zu dem Ladetransformator (120) geschaltet wird oder der Versorgungstransformator (140) der Schalteinrichtung (110) vorgeschaltet und mit seiner Primärseite an die Netzspannung (U_{N}) angekoppelt wird, und dass zumindest der Ladetransformator (120) des Ladegerätes (100) während der Ruhephase (R) von der Netzspannung (U_{N}) getrennt wird.

2. Verfahren nach Anspruch 1, **dadurch gekennzeichnet, dass** in dem Ladeerhaltungsmodus der Wechsel von der Ruhephase (R) in die Auffrischungsphase (A) dann erfolgt, wenn die Batteriespannung (U_{B}) die untere Schwellenspannung (U_{UG}) erreicht oder unterschritten hat.

3. Verfahren nach einem der vorangegangenen Ansprüche, **dadurch gekennzeichnet, dass** die Batterie (200) während der Auffrischungsphase (A) mit einem vordefinierten konstanten Ladestrom (I_{L}) aufgeladen wird.

4. Verfahren nach einem der vorangegangenen Ansprüche, **dadurch gekennzeichnet, dass** in dem Ladeerhaltungsmodus der Wechsel von der Auffrischungsphase (A) in die Ruhephase (R) dann erfolgt, wenn die Batterie (200) auf die obere Schwellenspannung oder darüber aufgeladen wurde.

5. Verfahren nach einem der vorangegangenen Ansprüche, **dadurch gekennzeichnet, dass** dem Ladeerhaltungsmodus ein Auflademodus (AL) vorausgeht, in welchem die Batterie (200) in einer ersten Phase vorzugsweise mit einem Konstantstrom auf die obere Schwellenspannung (U_{OG}) aufgeladen wird und in einer zweiten Phase mit einer konstanten Ladespannung gespeist wird.

6. Verfahren nach Anspruch 5, **dadurch gekennzeichnet, dass** ein Wechsel von der zweiten Phase des Auflademodus in den Ladeerhaltungsmodus, insbesondere in die Ruhephase (R), stattfindet, wenn die obere Schwellenspannung (U_{OG}) mit Hilfe der konstanten Ladespannung aufrecht erhalten geblieben ist und gleichzeitig der Ladestrom auf einen vorgegebenen Wert, der kleiner als der Wert des Konstantstroms in der ersten Phase ist, abgesunken ist.

7. Computerprogramm mit Programmcode für ein Batterie-Ladegerät **dadurch gekennzeichnet, dass** der Programmcode ausgebildet ist zum Durchführen des Verfahrens nach einem der Ansprüche 1 bis 6.

8. Datenträger mit einem Computerprogramm nach Anspruch 7.

9. Ladegerät (100) zum Aufladen einer Batterie (200) aus einer Netzspannung (U_{N}) umfassend:
- einen Ladetransformator (120) zum Transformieren der primärseitigen Netzspannung (U_{N}) in eine Sekundärspannung;
- einen Gleichrichter (130), welcher dem Ladetransformator (120) auf dessen Sekundärseite nachgeschaltet ist, zum Bereitstellen einer Ladespannung (U_{B}) für die Batterie aus der Sekundärspannung;
- eine Steuereinrichtung (150) zum Ansteuern des Gleichrichters (130) über ein Steuersignal (S1) im Ansprechen auf die Ladespannung (U_{B}) insbesondere so, dass die Batterie (200) nach ihrer Aufladephase in ihrem aufgeladenen Zustand gehalten wird, indem die Batterie (200) zyklisch zwischen einer Ruhephase (R), in welcher sich die Batterie von einer oberen Schwellenspannung (U OG) auf eine untere Schwellenspannung (U_{UG}), welche niedriger als die obere Schwellenspannung, aber vorzugsweise größer als die Nennspannung der Batterie ist, entlädt, und einer Auffrischungsphase (A) wechselt, in welcher die Batterie (200) über den Ladetransformator (120) des Ladegerätes (100) wieder von der unteren auf die obere Schwellenspannung aufgeladen wird;
- eine erste vergleichereinrichtung (160) zum Erzeugen eines ersten Vergleichssignals (V1), wenn die Batteriespannung (U_{B}) am Ende der Auffrischungsphase die obere Schwellenspannung (U_{OG}) erreicht oder überschritten hat; und
- eine Schalteinrichtung (110) zum Abschalten von zumindest dem Ladetransformator (120) während der Ruhephase (R) von der Netzspannung (U_{N}) im Ansprechen auf ein Schaltsignal (S2), welches das erste Vergleichssignal (V1) repräsentiert, **gekennzeichnet durch** einen Versorgungstransformator (140) zum Versorgen der Steuereinrichtung (150) auf seiner Sekundärseite mit einer Versorgungsspannung, wobei der Versorgungstransformator (140) der Schalteinrichtung (110) nachgeschaltet und mit seiner Primärseite parallel zu dem Ladetransformator (120) geschaltet ist oder der Versorgungstransformator (140) der Schalteinrichtung (110) vorgeschaltet und mit seiner Primärseite an die Netzspannung (U_{N}) angekoppelt ist.

10. Ladegerät (100) nach Anspruch 9, **gekennzeichnet durch** eine zweite Vergleichereinrichtung (170) zum Erzeugen eines zweiten Vergleichssignals (V2), wenn die Batteriespannung (U_{B}) am Ende der Ruhephase (R) die untere Schwellenspannung (U_{UG}) erreicht oder unterschritten hat.

11. Ladegerät (100) nach Anspruch 10, **gekennzeichnet durch** ein Oder-Logikmodul (180) zum Bereitstellen des Schaltsignals (S2) für die Schalteinrichtung (110) als Oder-Verknüpfung aus dem ersten und dem zweiten Vergleichssignal (V1, V2).

12. Ladegerät nach Anspruch 11, **dadurch gekennzeichnet, dass** die beiden Vergleichssignale (V1, V2) in der Weise miteinander synchronisiert sind, dass bei Erzeugung des ersten Vergleichssignals (V1) auch das zweite Vergleichssignal (V2) in einen solchen Zustand überführt wird, dass das Schaltsignal (S2) am Ausgang des Oder-Logikmoduls (180) einen Zustand annimmt, welcher die Schalteinrichtung (110) ausschaltet.

13. Ladegerät (100) nach einem der Ansprüche 9 bis 12, **dadurch gekennzeichnet, dass** die Steuereinrichtung (150), die erste und die zweite Vergleichereinrichtung (160, 170) und/oder das Oder-Logikmodul (180) als Integrierter Schaltkreis, vorzugsweise als Mikrocontroller oder Mikroprozessor mit einem geeigneten Computerprogramm realisiert ist.

14. Ladegerät (100) nach einem der Ansprüche 9 bis 13, **dadurch gekennzeichnet, dass** die Vergleichereinrichtungen (160, 170) in analoger Hardware ausgebildet sind.

15. Ladegerät (100) nach einem der Ansprüche 9 bis 14, **dadurch gekennzeichnet, dass** die Schalteinrichtung (110) als Opto-Triac ausgebildet ist.

## Claims

1. Method for operation of a mains-powered charger (100) for a battery (200) in a charge maintenance mode for keeping the battery in a charged state, with the battery (200) changing cyclically between a rest phase (R) and a refresh phase (A), with the battery (200) being discharged in the rest phase (R) from an upper threshold voltage (U_{OG}) to a lower threshold voltage (U_{UG}), which is lower than the upper threshold voltage but is preferably higher than the rated voltage of the battery, and with the battery (200) being charged in the refresh phase (A) via a charging transformer (120) in the charger (100) back from the lower threshold voltage to the upper threshold voltage;
**characterized in that** a control device (150) for the charger (100) is supplied with a supply voltage from a supply transformer (140) in order to operate a rectifier (130) which produces a charging voltage for the battery (200), with the supply transformer (140) being connected downstream from the switching device (110) and with its primary side being connected in parallel with the charging transformer (120) or with the supply transformer (140) being connected upstream of the switching device (110) and with its primary side being coupled to the mains voltage (U_{N}), and **in that** at least the charging transformer (120) in the charger (100) is disconnected from the mains voltage (U_{N}) during the rest phase (R).

2. Method according to Claim 1, **characterized in that**, in the charge maintenance mode, the change from the rest phase (R) to the refresh phase (A) takes place when the battery voltage (U_{B}) has reached or fallen below the lower threshold voltage (U_{UG}).

3. Method according to one of the preceding claims, **characterized in that**, during the refresh phase (A), the battery (200) is charged with a predefined constant charging current (I_{L}).

4. Method according to one of the preceding claims, **characterized in that**, in the charge maintenance mode, the change from the refresh phase (A) to the rest phase (R) takes place when the battery (200) has been charged to the upper threshold voltage or above it.

5. Method according to one of the preceding claims, **characterized in that** the charge maintenance mode is preceded by a charging mode (AL) in which the battery (200) is preferably charged with a constant current in a first phase to the upper threshold voltage (U_{OG}), and is charged with a constant charging voltage in a second phase.

6. Method according to Claim 5, **characterized in that** a change from the second phase of the charging mode to the charge maintenance mode, in particular to the rest phase (R), takes place when the upper threshold voltage (U_{OG}) has been maintained with the aid of the constant charging voltage and the charging current has at the same time fallen to a predetermined value which is less than the value of the constant current in the first phase.

7. Computer program with program code for a battery charger, **characterized in that** the program code is designed to carry out the method according to one of Claims 1 to 6.

8. Data storage medium having a computer program according to Claim 7.

9. Charger (100) for charging a battery (200) from a mains voltage (U_{N}), comprising:
- a charging transformer (120) for transformation of the mains voltage (U_{N}) on the primary side to a secondary voltage;
- a rectifier (130) which is connected downstream from the secondary side of the charging transformer (120) for production of a charging voltage (U_{B}) for the battery from the secondary voltage;
- a control device (150) for operation of the rectifier (130) via a control signal (S1) in response to the charging voltage (U_{B}), in particular such that the battery (200) is kept in its charged state after its charging phase in that the battery (200) changes cyclically between a rest phase (R), in which the battery is discharged from an upper threshold voltage (U_{OG}) to a lower threshold voltage (U_{UG}), which is lower than the upper threshold voltage but is preferably higher than the rated voltage of the battery, and a refresh phase (A) in which the battery (200) is charged via the charging transformer (120) in the charger (100) back from the lower threshold voltage to the upper threshold voltage;
- a first comparator device (160) for production of a first comparison signal (V1) when the battery voltage (U_{B}) has reached or exceeded the upper threshold voltage (U_{OG}) at the end of the refresh phase; and
- a switching device (110) for disconnection of at least the charging transformer (120) from the mains voltage (U_{N}) during the rest phase (R) in response to a switching signal (S2) which represents the first comparison signal (V1),
**characterized by** a supply transformer (140) for supplying the secondary side of the control device (150) with a supply voltage, with the supply transformer (140) being connected downstream from the switching device (110) and with its primary side being connected in parallel with the charging transformer (120) or with the supply transformer (140) being connected upstream of the switching device (110) and with its primary side being coupled to the mains voltage (U_{N}) .

10. Charger (100) according to Claim 9, **characterized by** a second comparator device (170) for production of a second comparison signal (V2) when the battery voltage (U_{B}) has reached or undershot the lower threshold voltage (U_{UG}) at the end of the rest phase (R).

11. Charger (100) according to Claim 10, **characterized by** an OR logic module (180) for production of the switching signal (S2) for the switching device (110) as an OR logic link from the first and the second comparison signal (V1, V2).

12. Charger according to Claim 11, **characterized in that** the two comparison signals (V1, V2) are synchronized with one another in such a way that, when the first comparison signal (V1) is produced, the second comparison signal (V2) is also changed to a state such that the switching signal (S2) at the output of the OR logic module (180) assumes a state which switches off the switching device (110).

13. Charger (100) according to one of Claims 9 to 12, **characterized in that** the control device (150), the first and the second comparator device (160, 170) and/or the OR logic module (180) are/is in the form of an integrated circuit, preferably a microcontroller or a microprocessor with a suitable computer program.

14. Charger (100) according to one of Claims 9 to 13, **characterized in that** the comparator devices (160, 170) are designed using analogue hardware.

15. Charger (100) according to one of Claims 9 to 14, **characterized in that** the switching device (110) is an opto-triac.

## Revendications

1. Procédé de gestion d'un appareil chargeur (100) alimenté par un réseau pour une batterie (200) en mode conservation de charge, pour maintenir la batterie à l'état chargé,
la batterie (200) alternant cycliquement entre une phase de repos (R) et une phase de rafraichissement (A),
la batterie (200) se déchargeant en phase de repos (R) en passant d'une tension de seuil supérieure (U_{OG}) à une tension de seuil inférieure (U_{UG}), inférieure à la tension de seuil supérieure, mais de préférence supérieure à la tension nominale de la batterie, et
en phase de rafraichissement (A), la batterie (200) se recharge par un transformateur chargeur (120) de l'appareil chargeur (100) pour passer de sa tension de seuil inférieure à sa tension de seuil supérieure,
**caractérisé par**
une installation de commande (150) de l'appareil chargeur (100) pour commander un redresseur (130) qui fournit une tension de charge pour la batterie (200), à partir d'un transformateur d'alimentation (140) avec une tension d'alimentation,
le transformateur d'alimentation (140) étant installé en aval de l'installation de commutation (110) et il est branché par son côté primaire en parallèle au transformateur de charge (120) ou en amont du transformateur d'alimentation (140) de l'installation de commutation (110) en étant couplé par son côté primaire à la tension de réseau (U_{N}), et
au moins le transformateur chargeur (120) de l'appareil chargeur (100) étant coupé de la tension du réseau (U_{N}) au cours de la phase de repos (R).

2. Procédé selon la revendication 1,
**caractérisé en ce qu'**
en mode de maintien de charge, l'alternance de la phase de repos (R) à la phase de rafraichissement (A) se fait si la tension de batterie (U_{B}) atteint ou passe en dessous de la tension de seuil inférieure (U_{UG}).

3. Procédé selon l'une des revendications précédentes,
**caractérisé en ce que**
pendant la phase de rafraichissement (A), la batterie (200) est rechargée par un courant de charge (IL) constant, prédéfini.

4. Procédé selon l'une des revendications précédentes,
**caractérisé en ce que**
dans le mode de maintien de charge, l'alternance entre la phase de rafraichissement (A) dans la phase de repos (R) ne se fait que si la batterie (200) a été chargée à la tension de seuil supérieure ou au-dessus de celle-ci.

5. Procédé selon l'une des revendications précédentes,
**caractérisé en ce que**
le mode de conservation de charge est précédé d'un mode de recharge (AL) au cours duquel la batterie (200) est rechargée dans une première phase, de préférence avec un courant constant jusqu'à la tension de seuil supérieure (U_{OG}) et elle est alimentée à une tension de charge constante au cours d'une seconde phase.

6. Procédé selon la revendication 5,
**caractérisé en ce que**
l'alternance entre la seconde phase du mode de recharge vers le mode de conservation de charge se fait notamment dans la phase de repos (R) si la tension de seuil supérieure (U_{OG}) a été maintenue constante à l'aide de la tension de charge constante et en même temps, le courant de charge a chuté à une valeur prédéfinie inférieure à la valeur du courant constant au cours de la première phase.

7. Programme d'ordinateur comportant un code de programme pour un appareil chargeur de batterie,
**caractérisé en ce que**
le code de programme est réalisé pour exécuter le procédé selon l'une des revendications 1 à 6.

8. Support de données contenant un programme d'ordinateur selon la revendication 7.

9. Appareil chargeur (100) pour charger une batterie (200) à partir d'une tension de réseau (U_{UN}) comprenant :
- un transformateur chargeur (120) pour transformer la tension de réseau (U_{N}) côté primaire, en une tension secondaire,
- un redresseur (130) en aval du transformateur chargeur (120) sur son côté secondaire, pour fournir une tension de charge (U_{B}) pour la batterie à partir de la tension du secondaire,
- une installation de commande (150) pour commander le redresseur (130) par un signal de commande (S1) en réponse à la tension de charge (U_{B}) notamment de façon qu'après sa phase de recharge, la batterie (200) reste maintenue dans son état chargé en ce que la batterie (200) alterne cycliquement entre une phase de repos (R) au cours de laquelle la batterie se décharge d'une tension de seuil supérieure (U_{OG}) à une tension de seuil inférieure (U_{UG}), inférieure à la tension de seuil supérieure mais de préférence plus grande que la tension nominale de la batterie, et une phase de rafraichissement (A) au cours de laquelle la batterie (200) est de nouveau rechargée par le transformateur chargeur (120) de l'appareil chargeur (100) pour passer de sa tension de seuil inférieure à sa tension de seuil supérieure,
- une première installation de comparaison (160) pour générer un premier signal de comparaison (V1) si la tension de batterie (U_{B}) à la fin de la phase de rafraichissement atteint ou dépasse la tension de seuil supérieure (U_{OG}), et
- une installation de commutation (110) pour couper au moins le transformateur chargeur (120) au cours de la phase de repos (R) par rapport à la tension du réseau (U_{R}), en réponse à un signal de commutation (S2) qui représente le premier signal de comparaison (V1),
**caractérise par**
un transformateur d'alimentation (140) pour alimenter l'installation de commande (150) sur son côté secondaire avec une tension d'alimentation,
le transformateur d'alimentation (140) étant en aval de l'installation de commutation (110) et son côté primaire est branché en parallèle sur le transformateur chargeur (120), ou
le transformateur d'alimentation (140) est en amont de l'installation de commutation (110) et son côté primaire est couplé sur la tension du réseau (U_{N}).

10. Appareil chargeur (100) selon la revendication 9,
**caractérisé par**
une seconde installation de comparaison (170) pour générer un second signal de comparaison (V2) si à la fin de la phase de repos (R) la tension de batterie (U_{B}) a atteint la tension de seuil inférieure (U_{UG}) ou est passée en dessous de celle-ci.

11. Appareil chargeur (100) selon la revendication 10,
**caractérisé par**
un module logique OU (180) pour fournir le signal de commutation (S2) à l'installation de commutation (110) comme combinaison logique OU du premier et du second signal de comparaison (V1, V2).

12. Appareil chargeur (100) selon la revendication 11,
**caractérisé en ce que**
les deux signaux de comparaison (V1, V2) sont synchronisés de façon qu'en générant le premier signal de comparaison (V1), également le second signal de comparaison (V2) est mis dans un tel état que le signal de commutation (S2) à la sortie du module logique OU (180) prend un état qui coupe l'installation de commutation (110).

13. Appareil chargeur (100) selon l'une des revendications 9 à 12,
**caractérisé en ce que**
l'installation de commande (150) réalise la première et la seconde installation de comparaison (160, 170) et/ou le module logique OU (180) comme circuit de commutation intégré de préférence comme micro-contrôleur ou comme microprocesseur avec un programme d'ordinateur approprié.

14. Appareil chargeur (100) selon l'une des revendications 9 à 13,
**caractérisé en ce que**
les installations de comparaison (160, 170) sont des circuits analogiques.

15. Appareil chargeur (100) selon l'une des revendications 9 à 14,
**caractérisé en ce que**
l'installation de commutation (110) est un Opto-Triac.
